(19) Europäisches Patentamt
European Patent Office
Office européen des brevets

(11) **EP 3 707 439 B1**

(12) **EUROPEAN PATENT SPECIFICATION**

(45) Date of publication and mention
of the grant of the patent:
**06.07.2022 Bulletin 2022/27**

(21) Application number: **18800576.3**

(22) Date of filing: **07.11.2018**

(51) International Patent Classification (IPC):
*F24F 11/30* (2018.01)      *F24F 7/007* (2006.01)
*F24F 11/00* (2018.01)      *F24F 11/63* (2018.01)
*F24F 11/72* (2018.01)      *G05B 15/00* (2006.01)
*G06F 17/00* (2019.01)

(52) Cooperative Patent Classification (CPC):
**F24F 7/007; F24F 11/0001; F24F 11/30;
F24F 11/63; F24F 11/72;** F24F 8/10;
F24F 2007/001; F24F 2011/0004; F24F 2110/10;
F24F 2110/12; F24F 2110/40; F24F 2110/50;
F24F 2110/64; F24F 2110/65; F24F 2110/66;

(Cont.)

(86) International application number:
**PCT/EP2018/080377**

(87) International publication number:
**WO 2019/091987 (16.05.2019 Gazette 2019/20)**

(54) **SMART AIR PURIFICATION**

INTELLIGENTE LUFTREINIGUNG

PURIFICATION D'AIR INTELLIGENTE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **09.11.2017 PCT/CN2017/110221
08.05.2018 EP 18171170**

(43) Date of publication of application:
**16.09.2020 Bulletin 2020/38**

(73) Proprietor: **Koninklijke Philips N.V.
5656 AG Eindhoven (NL)**

(72) Inventors:
• **SU, Jing
5656 AE Eindhoven (NL)**

• **ZHANG, Zhiqiang
5656 AE Eindhoven (NL)**

(74) Representative: **de Vries, Janna et al
Philips Domestic Appliances Nederland B.V.
High Tech Campus 42
5656 AE Eindhoven (NL)**

(56) References cited:
**WO-A1-2013/001155      FR-A1- 2 896 855
US-A1- 2013 239 803**

EP 3 707 439 B1

(52) Cooperative Patent Classification (CPC): (Cont.)
F24F 2120/12; F24F 2120/14; G05B 2219/2642;
Y02B 30/70

**Description**

FIELD OF THE INVENTION

The present invention relates to an air purification monitoring system for monitoring an air purification apparatus adapted to purify air in an enclosed space.

The present invention further relates to an air purification apparatus adapted to be controlled by such an air purification monitoring system.

The present invention further relates to a method of controlling such an air purification apparatus.

The present invention further relates to a computer program product for implementing such a method on an air purification monitoring system.

BACKGROUND OF THE INVENTION

Air purifiers are commonplace in today's society to clean air in confined spaces, e.g. rooms, for example to reduce the exposure of people in such confined spaces to harmful or unpleasant pollutants, e.g. allergens, particles, odours, and so on. To this end, the air purifiers typically comprise one or more pollutant removal structures, such as one or more filters, catalytic converters, electrostatic precipitators, and so on. The one or more filters may include air filters such as carbon filters, HEPA filters, odour filters, anti-bacterial filters or the like. Catalytic converters may be used to break down gaseous pollutants into smaller molecules, e.g. $H_2O$ and $CO_2$. Electrostatic precipitators may be employed for the removal of charged particles via collector plates. Other pollutant removal technologies employed in such purifiers are also known.

A particular class of air purifiers includes fresh air purification units (FAPUs), in which fresh air, i.e. outdoor air, is introduced into the confined space after being passed through one or more of the pollutant removal structures in order to at least partially remove potentially harmful constituents from the fresh air, e.g. pollutants such as particulate matter, $NO_x$, ozone and so on, which can cause health problems such as respiratory conditions, e.g. asthma, if sufferers from such conditions are exposed to such matter. However, the filtration capacity of such FAPUs is limited, which means that when the outdoor air is heavily polluted residual pollution will enter the confined space, which is highly undesirable. In addition, such heavy pollution can quickly saturate the pollutant removal structures in such a FAPU, such that these pollutant removal structures have to be regularly replaced.

This problem may be addressed by using a stand-alone air purifier within the confined space, which typically has high efficiency in particulate matter removal such that particulate matter entering the confined space from outside through natural ventilation can be effectively removed. In order to let such stand-alone air purifier work as efficiently as possible, it is recommended that such devices are operated in a hermetically sealed space, but this has the drawback that a build-up can occur of potentially harmful matter generated within the confined space. Such matter will also be referred to as unfavourable matter, that is, airborne constituents that, at least at certain concentrations, can be harmful to a person inhaling such matter. For example, indoor $CO_2$ concentrations should be kept below certain thresholds, as elevated $CO_2$ levels can cause drowsiness and headaches to persons exposed to such elevated levels. Other examples of such unfavourable matter include volatile organic compounds (VOCs) such as formaldehyde and toluene, which may be present in elevated levels after decoration of the confined space and which can compromise the health of persons exposed to such compounds.

Another way of preventing polluted outdoor air, e.g. automobile exhaust gases, from entering such an enclosed space is provided in KR 2008/104744, which discloses a system for purifying indoor air by ensuring that the indoor pressure is higher than the outdoor pressure by sensing the indoor and outdoor pressure. Although such an intelligent or smart air ventilation system is better equipped to prevent highly polluted outdoor air from entering a confined space, it may not guarantee that the system is operated at optimal efficiency.

US 2013/239803 A1 discloses reducing airborne contamination within a home using an air-pressure control system installed within a window of the home.

WO 2013/001155 A1 discloses contolling the pressure and air conditioning in a multi-story building.

SUMMARY OF THE INVENTION

The present invention seeks to provide an air purification monitoring system for monitoring an air purification apparatus that ensures that the air purification apparatus is operated at improved efficiency when purifying the air within an enclosed space.

The present invention further seeks to provide an air purification apparatus that can be controlled with such an air purification monitoring system.

The present invention further seeks to provide a computer-implemented method of controlling such an air purification apparatus.

The present invention further seeks to provide a computer program product that can be used to configure an air purification monitoring system to implement this computer-implemented method.

According to an aspect, there is provided an air purification monitoring system for monitoring an air purification apparatus adapted to purify air in an enclosed space, the air purification apparatus comprising a first inlet for receiving outdoor air from an outdoor space and at least one outlet coupled to the first inlet; a filter arrangement positioned in between the first inlet and the at least one outlet; and an air flow displacement arrangement arranged to generate a forced ventilation airflow from the first inlet to the at least one outlet; the air purification monitoring system comprising a processor arranged to receive an indication of a spontaneous ventilation rate between the enclosed space and the outdoor space; determine the spontaneous ventilation rate from said received indication; and generate a control signal for the air flow displacement arrangement as a function of said calculated spontaneous ventilation rate, said control signal causing the air flow displacement arrangement to control a rate of the forced ventilation airflow such that the forced ventilation airflow rate exceeds the spontaneous ventilation rate.

The present invention is based on the insight that the optimal mode of operation of an air purification apparatus in terms of efficiency is achieved when the air purification apparatus forces an airflow into the enclosed space at a rate that exceeds the spontaneous ventilation rate between the enclosed space and the outdoors by a defined, e.g. a small, amount, such that a positive pressure is created within the enclosed space that prevents outdoor unfavourable matter such as particulate matter or other pollutants from entering the enclosed space whilst the amount of energy required by the air purification apparatus to generate such a positive pressure is minimized. This is achieved by obtaining the estimate of the rate of spontaneous ventilation, based on which the air purification apparatus is operated.

In an embodiment, the processor is arranged to determine the spontaneous ventilation rate based on said indication and a volume of the enclosed space in order to obtain an accurate estimate of the rate of spontaneous ventilation.

The indication may comprise a series of sensor readings of a concentration of an analyte of interest within the enclosed space over time, and wherein the processor is arranged to calculate the spontaneous ventilation rate from said series of sensor readings. For example, in a scenario where a generation rate of the analyte of interest is known, the spontaneous ventilation rate may of the enclosed space be obtained from such a series of sensor readings. To this end, the air purification monitoring system may further comprise an analyte sensor arranged to provide said series of sensor readings. Alternatively, the sensor readings may be provided by an analyte sensor external to the air purification monitoring system.

In another embodiment, the indication comprises outdoor wind speed information. This embodiment is based on the insight that there exists a direct relationship between the rate of spontaneous ventilation of the enclosed space and the outdoor wind speed such that the rate of spontaneous ventilation can be derived from such an indication of the outdoor wind speed.

In yet another embodiment, the indication comprises the outdoor air temperature and the indoor air temperature, and wherein the processor is arranged to calculate the spontaneous ventilation rate from a difference between the outdoor air temperature and the indoor air temperature. This embodiment is based on the insight that there exists a direct relationship between the rate of spontaneous ventilation of the enclosed space and a temperature gradient between the outdoor temperature and the indoor temperature, i.e. the temperature within the enclosed space, such that the rate of spontaneous ventilation can be derived from the difference between these temperatures. To this end, the air purification monitoring system may further comprise at least one of an indoor temperature sensor for determining the indoor air temperature and an outdoor temperature sensor for determining the outdoor air temperature. Alternatively, such temperature readings may be obtained from an alternative source external to the air purification monitoring system.

The processor may be further arranged to receive a pressure sensor reading from a pressure sensor indicating a pressure within the enclosed space; and generate the control signal for the air flow displacement arrangement as a function of said spontaneous ventilation rate and the pressure sensor reading. The air purification monitoring system optionally may comprise such a pressure sensor. In this manner, a feedback mechanism may be provided in which the pressure reading is used to ensure that the correct amount of positive pressure is generated within the enclosed space, thereby further improving the efficiency of the air purification apparatus.

According to another aspect, there is provided an air purification apparatus adapted to purify air in an enclosed space, comprising a first inlet for receiving outdoor air from an outdoor space and at least one outlet coupled to the first inlet; a filter arrangement positioned in between the first inlet and the at least one outlet; and an air flow displacement arrangement arranged to generate a forced ventilation airflow from the first inlet to the at least one outlet, wherein the air flow displacement arrangement is responsive to the control signal generated with the air purification monitoring system according to any of the herein described embodiments. Such an air purification apparatus benefits from being operable in an efficient manner in order to create a positive pressure within the enclosed space to prevent unfavourable matter from outdoor entering the enclosed space as previously explained.

In at least some embodiments, the air purification apparatus further comprises the air purification monitoring system according to any of the herein described embodiments, thereby providing a self-contained air purification apparatus that includes the inventive air purification monitoring system.

The air purification apparatus may further comprise a second inlet for receiving indoor air from the enclosed space coupled to the at least one outlet, wherein the filter arrangement is positioned in between the first and second inlets and the at least one outlet; and the air flow displacement arrangement is further arranged to generate a recirculation airflow from the second inlet to the at least one outlet. This has the advantage that the indoor air may also be purified by the air purification apparatus, e.g. to reduce concentration of unfavourable matter such as volatile organic compounds or the like. Additional embodiments may include an air purification apparatus further comprising an exhaust mode in which the indoor air is vented to outdoors, which for example may be advantageous when the indoor air comprises a high concentration of unfavourable matter that cannot be removed by the filter arrangement, e.g. $CO_2$ or the like, in which case such contaminated air can be removed from the enclosed space.

According to yet another aspect, there is provided a computer implemented method for generating a control signal for controlling the air purification apparatus of any of the herein described embodiments, the method comprising receiving an indication of a spontaneous ventilation rate between the enclosed space and the outdoor space; determining the spontaneous ventilation rate from said received indication; and generating a control signal for the air flow displacement arrangement as a function of said calculated spontaneous ventilation rate, said control signal causing the air flow displacement arrangement to control a rate of the forced ventilation airflow such that the forced ventilation airflow rate exceeds the spontaneous ventilation rate. The generation of such a control signal facilitates the control of the air purification apparatus such that the air purification apparatus operates in a highly efficient manner whilst establishing a positive pressure within the enclosed space as previously explained.

Preferably, determining the spontaneous ventilation rate from said received indication comprises determining the spontaneous ventilation rate based on said indication and a volume of the enclosed space in order to obtain a particularly accurate estimate of the spontaneous ventilation rate.

According to still another aspect, there is provided a computer program product comprising a computer readable storage medium having computer readable program instructions embodied therewith for, when executed on the processor of the air purification monitoring system of any of the herein described embodiments, causes the processor to implement the method of any of the herein described embodiments. Such a computer program product may be used to reconfigure an existing air purification monitoring system, which may be more cost-effective than replacing such a system in order to implement the functionality according to embodiments of the present invention.

BRIEF DESCRIPTION OF THE DRAWINGS

Embodiments of the invention are described in more detail and by way of non-limiting examples with reference to the accompanying drawings, wherein:

FIG. 1 schematically depicts an air purification arrangement including an air purification monitoring system according to an embodiment;
FIG. 2 schematically depicts an air purification arrangement including an air purification monitoring system according to another embodiment;
FIG. 3 schematically depicts an air purification apparatus according to an example embodiment;
FIG. 4 schematically depicts an air purification apparatus according to another example embodiment;
FIG. 5 schematically depicts an air purification apparatus according to yet another example embodiment;
FIG. 6 schematically depicts an air purification apparatus according to yet another example embodiment;
FIG. 7 is a flowchart of a method of controlling an air purification apparatus located in an air-filled space according to an embodiment;
FIG. 8 shows a graph depicting the relationship between outdoor wind speed (x-axis, m/s) and spontaneous ventilation rate (y-axis, $h^{-1}$);
FIG. 9 shows a set of graphs associated with a first ventilation condition of a room in which an air purification apparatus according to an embodiment of the present invention is placed;
FIG. 10 shows a set of graphs associated with a second ventilation condition of a room in which an air purification apparatus according to an embodiment of the present invention is placed; and
FIG. 11 shows a graph depicting the relationship between outdoor and indoor temperature gradient (x-axis, °C) and spontaneous ventilation rate (y-axis, $h^{-1}$).

DETAILED DESCRIPTION OF THE EMBODIMENTS

It should be understood that the Figures are merely schematic and are not drawn to scale. It should also be understood that the same reference numerals are used throughout the Figures to indicate the same or similar parts.

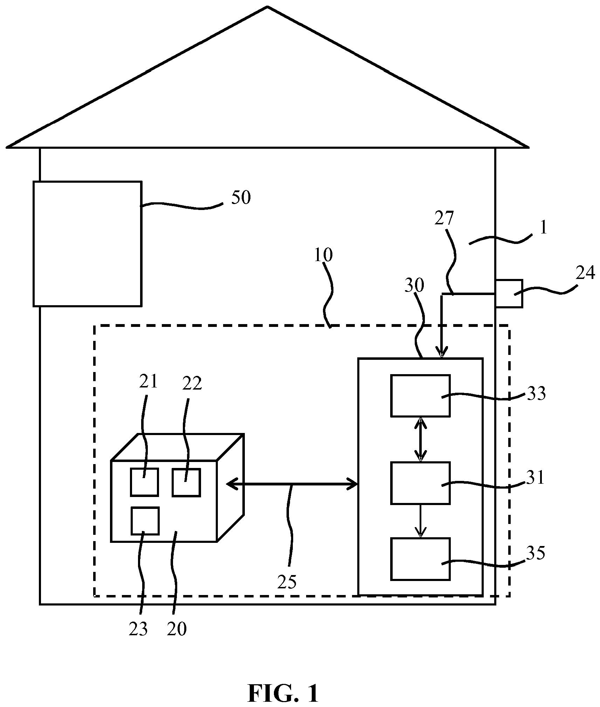

FIG. 1 schematically depicts an air purification monitoring system 10 according to an embodiment. The air purification monitoring system 10 is adapted to control the operation of an air purification apparatus 50 fitted into the enclosed space 1 such as a room of a house, office building or the like. As will be explained in further detail below, the air purification apparatus 50 is at least operable in a first mode in which outdoor air is ventilated into the enclosed space 1. Such forced ventilation is performed in this mode at a rate that exceeds the rate of natural or spontaneous ventilation between the enclosed space 1 and the outdoors, e.g. through imperfections in the hermetic seal of the enclosed space 1, which may include opened windows or doors. This will be explained in further detail below. In some embodiments, the air purification apparatus 50 may also be operable in a second mode in which the indoor air within the enclosed space 1 is circulated through the air purification apparatus 50. Such airflows are typically passed through one or more pollutant removal structures fitted within the air purification apparatus 50 in order to purify this air before it is expelled into the enclosed space 1. Such an air purification apparatus 50 may be fitted within the enclosed space 1 in any suitable manner, such as through an external wall, roof or window of a building or dwelling enclosing the space 1 such that the air purification apparatus 50 has access to the outdoor space from which the outdoor air is sourced. Such an air purification apparatus 50 may contain any suitable type of pollutant removal structures, e.g. filters such as HEPA filters, carbon filters, and so on in order to remove pollutants such as particulate matter, pollen, odours, bacteria, volatile organic compounds (VOCs) such as formaldehyde and toluene, and so on.

The air purification monitoring system 10 typically comprises a computing device 30 including a processor 31. The computing device 30 may be any suitable computing device, such as a personal computer, e.g. a desktop computer or a laptop computer, a tablet computer, a personal digital assistant, a mobile communication device such as a smartphone and so on. The computing device 30 may form an assembly with the air purifier 50. In such an assembly, the computing device 30 may be a discrete entity or may form part of the air purifier 50, i.e. the air purifier 50 may comprise the processor 31. The processor 31 may be any suitable processor, e.g. a generic processor or an application-specific processor. The computing device 30 may further comprise a data storage device 33 communicatively coupled to the processor 31.

The computing device 30 is arranged to communicate with one or more sensors 21, 22, 23. Such sensors may include a pressure sensor 23, a temperature sensor 22 and/or one or more unfavourable matter sensors 21, e.g. analyte sensors, for sensing levels of an unfavourable matter or analyte of interest in the atmosphere within the enclosed space 1 in which the air purification apparatus 50 is placed. Typically, the first unfavourable matter sensor 21 is arranged to sense a concentration or level of an unfavourable matter for which the air purification apparatus 50 comprises a pollutant removal structure such as an air filter or the like arranged to remove this unfavourable matter. For example, the sensor 21 may be a particulate matter sensor such as a PM 2.5 sensor for detecting particulate matter of a certain diameter in the atmosphere, e.g. PM2.5 or PM10, dust particles, allergens, or the like, a formaldehyde sensor, a toluene sensor, and so on. Alternatively, the first unfavourable matter sensor 21 is a carbon dioxide sensor ($CO_2$) to monitor $CO_2$ levels within the enclosed space 1. In this scenario, as will be understood by the skilled person, the air purification apparatus 50 may not comprise a pollutant removal structure capable of removing $CO_2$.

In a particular embodiment, the processor 31 is also communicatively coupled to an outdoor temperature sensor 24 arranged to sense the outdoor temperature. Such an outdoor temperature sensor 24 may be located in any suitable outdoor location, such as for example on an external surface of a dwelling containing the enclosed space 1. Alternatively, the processor 31 may be arranged to obtain outdoor temperature information from an external source over a network connection such as the Internet, which external source may be a meteorological service or the like providing real-time temperature information about a geographical location in which this dwelling is located. However, as will be explained in further detail below, the provision of indoor and outdoor temperature information to the processor 31 is not essential to the present invention such that in alternative embodiments the indoor temperature sensor 23 and/or the outdoor temperature sensor 24 (or the temperature-providing service) may be omitted. In yet another embodiment, the external sensor 24 may be a wind speed meter to measure the outdoor wind speeds as will be explained in further detail below.

The sensors 21, 22, 23 may be integrated in any suitable device, such as the air purification apparatus 50, the computing device 30 or a stand-alone sensor device 20, e.g. a sensor box or the like. Stand-alone sensor devices, e.g. sensor boxes, are increasingly available for home-use and may include sensors for measuring air pollutants such as volatile organic compounds (VOCs) including formaldehyde and toluene, particulates including PM2.5 as well as environmental parameters such as relative humidity and temperature. The processor 31 may be adapted to monitor the concentration of a particular pollutant, the temperature within the enclosed space 1 and/or the pressure within the enclosed space 1 based on the sensor data provided by the sensors 21, 22, 23 of the sensor device 20. In an embodiment, the processor 31 may be integrated into such a stand-alone sensor device 20, i.e. the stand-alone sensor device 20 may comprise the computing device 30.

The sensors 21, 22, 23 are communicatively coupled to the computing device 30 over a communication link 25 such that the processor 31 can receive sensor readings from such sensors. Such a communication link may be a wired communication link, e.g. in case the sensors 21, 22, 23 are integral to the computing device 30, or may be a wireless communication link, e.g. in case the sensors 21, 22, 23 are located in a different device to the computing device 30, e.g. in a stand-alone sensor device 20. To this end, the respective devices communicatively coupled over such a wireless communication link may include a wireless transceiver (not shown). The devices may communicate with each other through their respective wireless transceivers using any suitable wireless communication protocol, e.g. Bluetooth, Wi-Fi, a mobile communication protocol such as 2G, 3G, 4G or 5G, a suitable near-field communication (NFC) protocol or a proprietary protocol. In case of such wireless communication, the respective devices may communicate directly with each other or may communicate with each other through an intermediary such as a wireless bridge, a router, a hub, and so on. Any suitable embodiment of wired or wireless communication between such respective devices may be contemplated.

The processor 31 may be further communicatively coupled to a data storage device 33, here shown to form part of the computing device 30. Such a data storage device may be any suitable device for storing digital data, e.g. a random access memory, a cache memory, a Flash memory, a solid state storage device, a magnetic storage device such as hard disk, an optical storage device and so on. Alternatively, the data storage device 33 may be separate from the computing device 30, e.g. a network storage device or a cloud storage device accessible to the processor 31 over a network such as a LAN or the Internet. The processor 31 may store sensor data received from one or more of the connected sensors 21, 22, 23 in the data storage device in order to collect and store historical data, for example regarding the levels of the unfavourable matter interest in the atmosphere within the enclosed space 1 comprising the air purification apparatus 50 from which the processor 31 may derive certain parameters relating to the enclosed space 1 as will be explained in further detail below.

In FIG. 1, the computing device 30 further comprises a sensory output device 35 under control of the processor 31. Such a sensory output device may be any device that capable of producing an output that can be detected by one of the human senses. For example, the sensory output device 35 may be adapted to produce a visible or audible output. For example, the sensory output device 35 may comprise a display and/or one or more LEDs adapted to provide such an output.

As will be readily understood by the skilled person, the processor 31 may be adapted to receive sensor data from a plurality of sensors 21 each associated with different unfavourable matter of interest, with the processor 31 adapted to (simultaneously) monitor the respective concentration levels of different unfavourable matter of interest from the sensor data received from the multiple sensors in the sensor device 20.

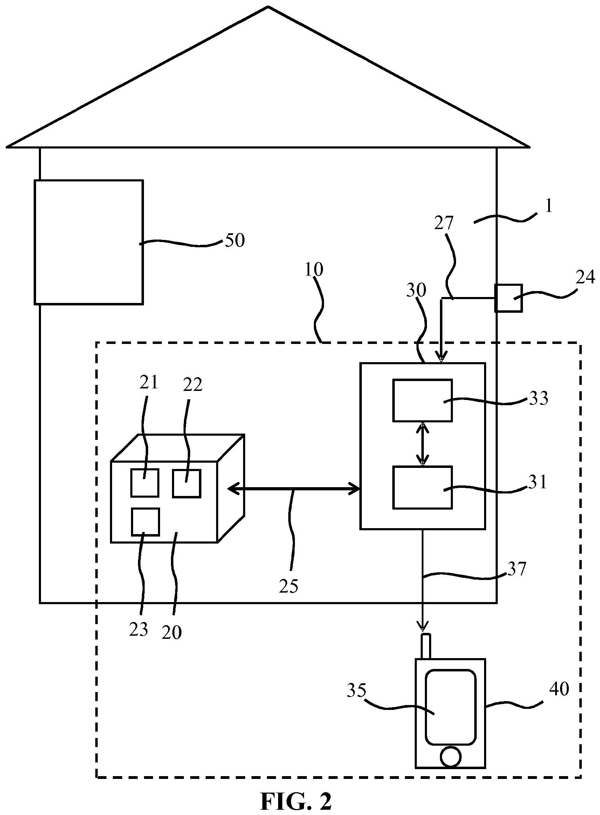

In the above embodiment, the sensory output device 35 forms part of the computing device 30, e.g. may be an integral part of the computing device 30 or may be attached to the computing device 30, e.g. a monitor or loudspeaker attached to the computing device 30. In an alternative arrangement schematically depicted in FIG. 2, the sensory output device 35 may form part of a mobile communication device 40, with the computing device 30 adapted to communicate with the mobile communication device over a wireless communication link 37, e.g. using any of the aforementioned wireless communication protocols. In this embodiment, may be able to control the operation of the air purification apparatus 50 even when not in direct vicinity of the computing device 30, e.g. when being in a different room or being outside the building comprising the air purification apparatus 50, which for example is advantageous in order to ensure that the enclosed space 1 is conditioned to a desired condition in anticipation of the arrival of the user of the mobile communication device 40 in the enclosed space 1. Any suitable mobile communication device 40, e.g. a smart phone, tablet computer, personal digital assistant, and so on, may be used for this purpose. As will be readily understood by the skilled person, the mobile communication device 40 may be configured with a software application program, e.g. an app, to interact with the computing device 30 as described above.

In yet another embodiment, the sensor(s) 21, 22, 23 as well as the processor 31 and the sensory output device 35 are integrated in the air purification apparatus 50, thereby forming an integrated air purification apparatus 50 according to an embodiment of the present invention.

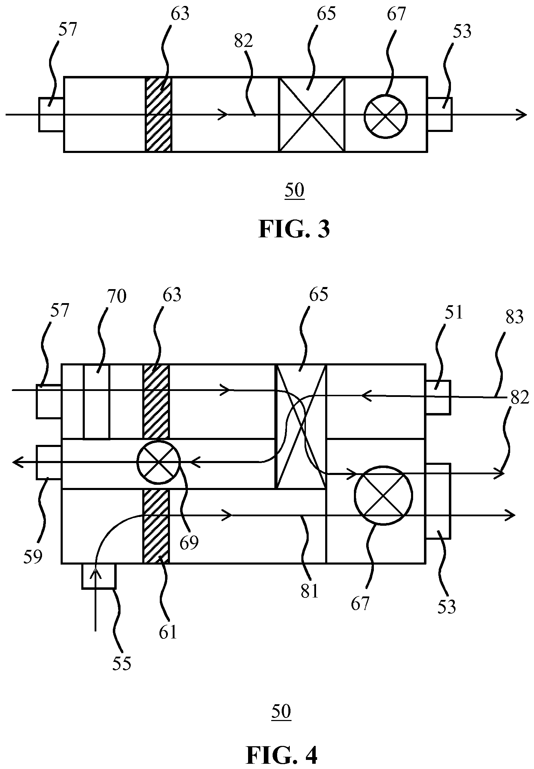

Next, some examples of an air purification apparatus 50 according to embodiments of the present invention will be described in further detail. A first example is schematically depicted in FIG. 3, which depicts an air purification apparatus 50 adapted to generate a ventilation airflow 82 that introduces air from the outdoor space into the enclosed space 1 through a pollutant removal structure 63 in a conduit in between an outdoor inlet 57 and an indoor outlet 53 of the air purification apparatus 50, thereby lowering the concentration of an outdoor unfavourable matter to be introduced into the enclosed space 1. The conduit may further house a heat exchanger 70 that adjusts, e.g. heats or cools, the outdoor air prior to its introduction into the enclosed space 1 for the purpose of climate control, as is well-known per se. The ventilation airflow 82 may be generated using an air displacement apparatus or device 67, such as a fan, ventilator, ionic wind generator, air pump, or the like. A valve arrangement 65 may be present to further regulate the air flow rate of the ventilation airflow 82.

Another example of such an air purification apparatus 50 is schematically depicted in FIG. 4, which depicts an air purification apparatus 50 adapted to generate a first airflow 81, from here on referred to a recirculation airflow 81, a second airflow, i.e. a ventilation airflow 82, and a third airflow 83, from here on referred to as an exhaust airflow 83. The recirculation airflow 81 recirculates air from within the enclosed space 1 through a pollutant removal structure 61 in a conduit in between an indoor inlet 55 and a first indoor outlet 53 of the air purification apparatus 50 into the enclosed space 1, thereby lowering the concentration of an indoor unfavourable matter and purifying the indoor air. The recirculation airflow 81 may be generated using a first air displacement apparatus or device 67, such as a fan, ventilator, ionic wind generator, air pump, or the like.

The ventilation airflow 82 introduces air from the outdoor space into the enclosed space 1 through a further pollutant removal structure 63 in a further conduit in between an outdoor inlet 57 and a second indoor outlet 51 of the air purification apparatus 50, thereby lowering the concentration of an outdoor unfavourable matter to be introduced into the enclosed space 1. The further conduit may further house a heat exchanger 70 that adjusts, e.g. heats or cools, the outdoor air prior to its introduction into the enclosed space 1 for the purpose of climate control, as is well-known per se. The ventilation airflow 81 may be generated using a second air displacement apparatus or device 69, such as a fan, ventilator, ionic wind generator, air pump, or the like.

As will be explained in more detail below, the ventilation airflow 82 may be used to generate a positive pressure relative to the outdoor space within the enclosed space 1, thereby forcing air from the enclosed space 1, i.e. ventilating the enclosed space 1, e.g. in order to lower the concentration of an unfavourable matter generated within the enclosed space 1, such as for example VOCs in case of a freshly decorated enclosed space 1 or $CO_2$ by people being present within the enclosed space 1 and/or to prevent unfiltered outdoor air including high concentrations of unfavorable matter from entering the enclosed space 1 through natural or spontaneous ventilation.

The exhaust airflow 83 may be used to assist forced ventilation of the enclosed space 1 by forcibly expelling indoor air under control of the second air displacement apparatus or device 69 by way of non-limiting example only. A third second air displacement apparatus or device (not shown) may be used for this purpose instead. The exhaust airflow 83 may be passed through yet a further conduit extending between an indoor inlet such as the second inlet 51 and an outdoor outlet 59. The valve arrangement 65 may be present to switch the operation of the second air displacement apparatus or device 69 between generation of the ventilation airflow 82 and the exhaust airflow 83 as will be readily understood by the skilled person.

As previously mentioned, the pollutant removal structures 61, 63 within the air purification apparatus 50 may be configured to remove any suitable unfavourable matter from the indoor or outdoor air such as for example $O_3$, PM 10, PM 2.5, CO, $NO_2$ $SO_2$, volatile organic compounds such as formaldehyde or toluene, and so on. It should furthermore be understood that in accordance with embodiments of the present invention, the air purification apparatus 50 is arranged to generate at least the ventilation airflow 82, and preferably also the recirculation airflow 81, which may be achieved with any suitable configuration of the air purification apparatus 50.

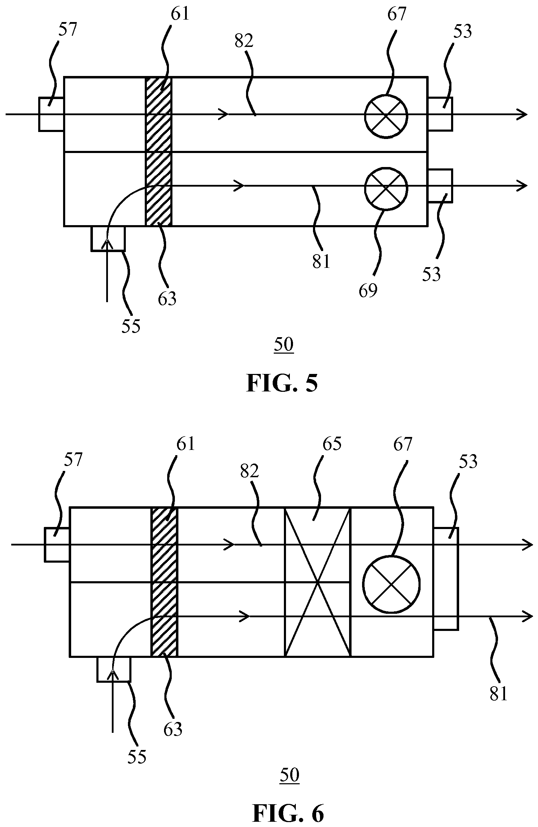

For example, FIG. 5 schematically depicts another example embodiment of the air purification apparatus 50, in which the air purification apparatus 50 is configured to generate the recirculation airflow 81 and the ventilation airflow 82 only using independent air displacement apparatuses 67, 69 as previously explained, whereas in FIG. 6 another example embodiment of the air purification apparatus 50 is schematically depicted in which the recirculation airflow 81 and the ventilation airflow 82 are generated using a single air displacement apparatus 67 communicatively coupled to a valve arrangement 65 that allows the air purification apparatus 50 to switch between the recirculation airflow 81 and the ventilation airflow 82 or mixtures thereof. FIG. 6 further schematically depicts that the recirculation airflow 81 and the ventilation airflow 82 share the same indoor outlet 53 of the air purification apparatus 50, and it should be understood that any of the embodiments of the air purification apparatus 50 these airflows may share such an outlet. It should furthermore be understood that many more configuration variations of the air purification apparatus 50 are of course possible without departing from the teachings of the present invention such that the given example configurations of the air purification apparatus 50 should in no way be construed as limiting the scope of the present invention.

Although not specifically shown in these example embodiments, the air purification apparatus 50 may comprise at least part of the air purification monitoring system 10 and/or the sensor device 20. For example, the air purification apparatus 50 may include the air purification monitoring system 10 according to any of the described embodiments communicatively coupled to a separate sensor device 20 according to any of the described embodiments, the air purification apparatus 50 may include both the air purification monitoring system 10 according to any of the described embodiments and the sensor device 20 according to any of the described embodiments.

Alternatively, the air purification apparatus 50 may include a wired or wireless communication module (not shown) adapted to communicate with the air purification monitoring system 10 according to any of the described embodiments, which itself may be communicatively coupled to a separate sensor device 20 according to any of the described embodiments. In this case, the air purification apparatus 50 further comprises a controller arrangement (not shown) of the one or more air displacement apparatuses 67, 69 that controls the one or more air displacement apparatuses 67, 69 in accordance with a control signal generated by the processor 31 as will be explained in further detail below. In the context of the present application, such a control signal may comprise one or more control instructions for the air purification apparatus 50. Such control instructions configure the air purification apparatus 50 to operate in a particular mode and as such may instruct the air purification apparatus 50 to operate any of the air displacement apparatuses 67, 69, the valve arrangement 65 if present and so on in accordance with the configuration information conveyed by the control signal.

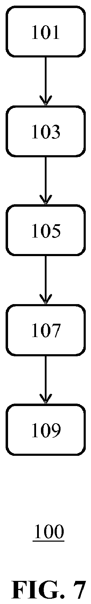

In accordance with embodiments of the present invention, the processor 31 is adapted to implement the method 100, a flow chart of which is depicted in FIG. 7. The method 100 starts in operation 101, in which the processor 31 is activated, after which the method proceeds to operation 103 in which the processor receives an indication of a spontaneous ventilation rate between the enclosed space and the outdoor space from which the processor 31 determines the spontaneous ventilation rate in operation 105. This preferably is based on both the received indication and an estimation of the volume of the enclosed space 1, as will now be explained in further detail.

Regarding the determination of the volume of the enclosed space 1, in a straightforward embodiment this volume may be specified by a user using any user interface communicatively coupled to the processor 31. This therefore relies on the user providing an accurate estimate of the volume of the enclosed space 1 to ensure that the air purification apparatus 50 can be operated in an efficient manner.

In an alternative embodiment, the volume of the enclosed space 1 may be estimated based on sensor information provided by the sensor device 20. Specifically, the room volume may be derived from a monitored indoor particle (pollutant) concentration, e.g. with the analyte sensor 21, which obeys equation 1 based on the mass conservation law:

$$\frac{dC}{dt} = k_v P_p C_{out} - (k_0 + k_v)C - \frac{CADR}{V} * C \qquad (1)$$

In the formula:

C Indoor particle concentration, $g/m^3$;
$P_p$ Penetration coefficient of particles from the outside world into the air-filled space housing the air purification apparatus 50, this coefficient typically is around 0.8 in an average domestic dwelling;
$C_{out}$ Outdoor particle concentration, $g/m^3$, which may be obtained as explained in the present application;
$k_0$ Particle natural sedimentation rate, $h^{-1}$, normally around 0.2 $h^{-1}$;
$k_v$ Air changing rate, $h^{-1}$;
$V$ Room volume, $m^3$;
CADR Clean Air Delivery Rate, $m^3/h$.

A typical CADR curve may be recorded by the analyte sensor 21, e.g. may be expressed using a linear scale on the y-axis of a plot depicting the CADR curve. The recorded CADR curve can be expressed by equation (2):

$$C = m * e^{-kt} \qquad (2)$$

$k$ is thus the exponential decay constant in respect of the concentration curve.

By combining equations (1) and (2), the following equation (3) is obtained:

$$\frac{dC}{dt} = -km * e^{-kt} = k_v P_p C_{out} - (k_0 + k_v)C - \frac{CADR}{V} * C \quad (3)$$

By substituting $-km * e^{-kt} = -kC$, equation (4) may be obtained as follows:

$$\left( \frac{CADR}{V} - k + k_0 + k_v \right) * C = k_v P_p C_{out}$$

$$\frac{CADR}{V} = \frac{k_v P_p C_{out}}{C} + k - k_0 - k_v$$

$$\frac{CADR}{V_0} = \frac{0.8 k_v C_{out}}{C} + k - k_v - 0.2 \qquad (4)$$

The initial CADR may be used to calculate the room volume Vo, i.e. the volume V of the enclosed space 1 housing the air purification apparatus 50. This room volume for instance may be obtained when the air purification apparatus 50 is operated for the first time in a hermetically enclosed space 1. Other suitable ways of obtaining the room volume may be applied instead.

In a first set of embodiments, the indication of the spontaneous ventilation rate as received by the processor 31 comprises information concerning the outdoor wind speed, which may be received by the processor 31 from a meteorological service as previously mentioned providing wind speed information for the geographical location of the enclosed space 1 or from a wind speed meter (e.g. an external sensor 24) in this geographical location, e.g. a wind speed meter attached to the dwelling comprising the enclosed space 1.

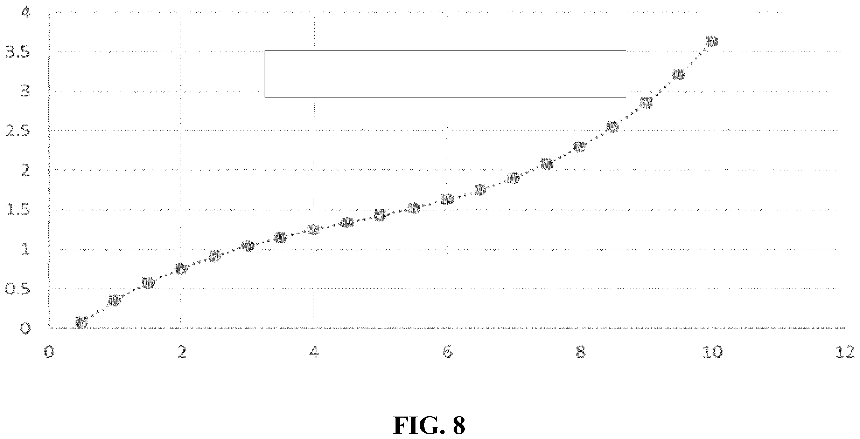

It is known per se that a relationship exists between outdoor wind speeds and a spontaneous rate of ventilation between an enclosed space 1 in communication with the outdoors. This relationship is schematically depicted in FIG. 8, which depicts a graph showing the rate in ($h^{-1}$) at which the volume of an enclosed space 1 is displaced as a function of the outdoor wind speed (in m/s). This graph clearly depicts that with increasing outdoor wind speeds the rate at which spontaneous ventilation between the enclosed space 1 and the outdoor space occurs increases as well, such that the spontaneous ventilation rate of the enclosed space 1 can be estimated from the indicated outdoor wind speed.

In a second set of embodiments, such an indication comprises a series of sensor readings of a concentration of an analyte of interest within the enclosed space 1 over a defined period of time, with the processor 31 being arranged to calculate the spontaneous ventilation rate from said series of sensor readings. For example, the processor 31 may be adapted to estimate the natural rate of ventilation Q based on changes in the $CO_2$ concentration or any other suitable gaseous compound, e.g. volatile organic compounds (VOCs), within the enclosed space 1 housing the air purification apparatus 50 when one or more persons are present in the air-filled space and the air purification apparatus 50 is switched off. Specifically, as such persons exhale $CO_2$, the level of $CO_2$ within the air-filled space should increase in accordance with the number of people within the air-filled space and its volume. Deviations from such expected increase, i.e. a smaller increase in $CO_2$ levels over time than expected, can be attributed to ventilation between the air-filled space and the outside world. For example, the processor 31 may be adapted to estimate the rate of ventilation Q in accordance with equation (5):

$$Croom(t) = \left(Croom(t=0) - \frac{C_{outdoor}*Q+S}{Q}\right) * e^{\frac{Q}{-V}\Delta t} + \frac{C_{outdoor}*Q+S}{Q} \qquad (5)$$

In equation (5), Croom(t) is the $CO_2$ concentration in the air-filled space (in $g/m^3$) at a point in time t, i.e. a period of time $\Delta t$ (in hours) after start of the monitoring period at t=0, $C_{outdoor}$ is the ambient $CO_2$ concentration (in $g/m^3$) in the outside world in ventilation with the air-filled space, and S is the $CO_2$ source strength (in $g/m^3$) within the air-filled space. The $CO_2$ source strength of an individual ($S_i$) typically is within a given range (e.g. within a range of 0.16-0.33 1/min for an adult).

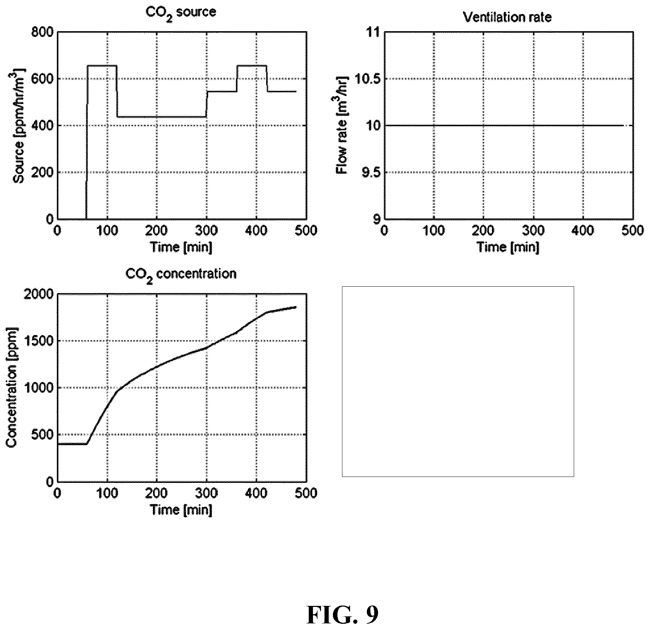

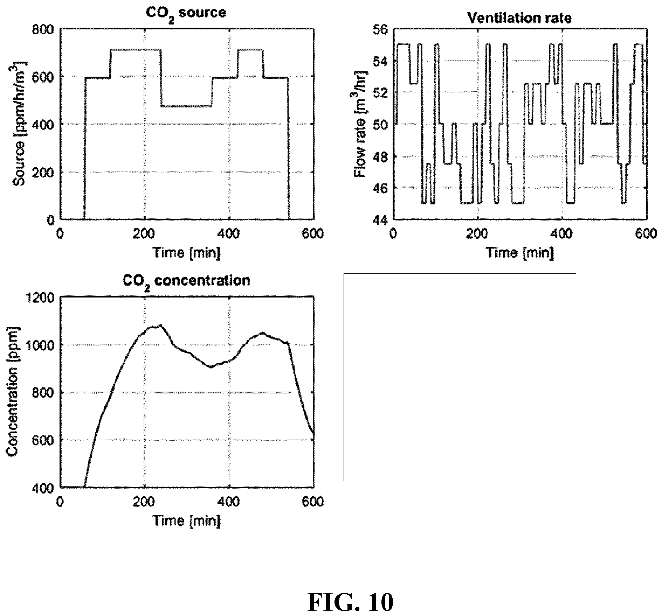

The processor 31 may calculate the source strength S based on a determined number N of individuals within the air-filled space, e.g. $S = N*S_i$. The number N of individuals within the air-filled space may be determined in any suitable manner, e.g. the number N may be specified by a user through a user interface of the air purification monitoring system 10 or alternatively the air purification monitoring system 10 may comprise one or more sensors (not shown), e.g. motion detection sensors or the like, for detecting the presence of individuals within the air-filled space. FIG. 9 and FIG. 10 each depict a plurality of graphs including a graph depicting the $CO_2$ source strength S (top left), natural ventilation rate Q (top right) and $CO_2$ concentration Croom (t) (bottom left) as a function of time. In FIG. 9 the enclosed space 1 exhibits a low rate of ventilation whereas in FIG. 10 the enclosed space 1 exhibits a high rate of ventilation, as evidenced by the high degree of fluctuations in the natural ventilation rate Q due to changes in ambient conditions such as wind conditions. This leads to noticeable differences in the build-up of $CO_2$ within the enclosed space 1, which may be used to estimate the rate of spontaneous (natural) ventilation between the enclosed space 1 and the outdoor space.

The processor 31 may determine the natural rate of ventilation Q between the enclosed space 1 housing the air purification apparatus 50 and the outside world based on a series of sensor signals received from a $CO_2$ sensor 21, as the trend in the $CO_2$ concentration in the air-filled space can be used to determine the spontaneous rate of ventilation Q, i.e. the rate of ventilation when the air purification apparatus 50 is switched off, as has been explained in more detail above with the aid of equation (5). It should be understood that equation (5) is provided by way of non-limiting example only and that other equations from which the rate of ventilation Q can be derived based on such trends in $CO_2$ may also be used. The processor 31 may obtain the ambient $CO_2$ concentration for determining the rate of ventilation Q in any suitable manner, e.g. from a further $CO_2$ sensor placed in the outside world or from a service over a network such as the Internet providing (real-time) information about $CO_2$ concentrations in regions of interest including the region in which the enclosed space 1 is located. The processor 31 may obtain the ambient $CO_2$ concentration at any suitable point in time.

Alternatively, the natural ventilation rate Q may be determined by monitoring other gaseous compounds generated by persons within the air-filled space, e.g. volatile organic compounds. It should furthermore be understood that the source strength S is not necessarily limited to the generation of $CO_2$ by people within the enclosed space 1. It is for instance equally feasible that the source strength S represents a rate of release of another unfavourable matter, such as a volatile organic compound being released within a freshly decorated enclosed space 1. Alternatively, the spontaneous rate of ventilation of the enclosed room 1 may be estimated in any other suitable manner, such as a user-specified estimate provided through a user interface in communication with the processor 31.

Further refinements to the estimation of the room volume and the rate of spontaneous ventilation are of course possible. For example, the processor 31 may receive a series of sensor readings from the analyte sensor 21 such as a $CO_2$ sensor or VOC sensor, e.g. in order to monitor changes in the $CO_2$ levels within the enclosed space 1, as such changes may be indicative of changes in the volume of the enclosed space, e.g. by a door or the like between the enclosed space 1 and an adjacent space being opened or closed or a change in ventilation conditions between the air-filled space and the outside world. A change in the volume or ventilation conditions of the air-filled space can be detected by a sudden change in the unfavourable matter levels and/or $CO_2$ levels (or levels of other pollutants monitored to determine the occupancy rate of the enclosed space 1 as previously explained). For example, where the processor 31 detects a sudden change in unfavourable matter concentration and $CO_2$ concentration, this may be indicative of a change in the volume of the enclosed space 1 or a change in the ventilation conditions of the enclosed space 1.

The processor 31 may distinguish between a change in volume and a change in ventilation conditions in the following manner. In case of a change in volume of the enclosed space 1 after the initial sudden change in monitored pollutant and $CO_2$ levels, these levels will gradually decrease until an equilibrium is reached between the two connected spaces. In such a scenario, the $CO_2$ levels typically remain higher than the typical ambient $CO_2$ levels of about 400 ppm. In case of a change in ventilation conditions, the $CO_2$ level in the air-filled space will rapidly equilibrate with ambient $CO_2$ levels, i.e. reach levels of about 400 ppm.

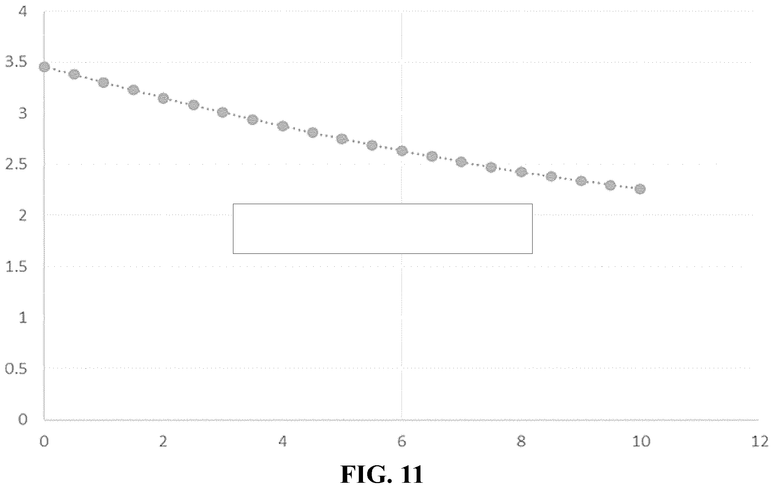

In a third set of embodiments, the indication of the spontaneous ventilation rate of the enclosed space 1 comprises temperature information including the outdoor air temperature and the indoor air temperature, with the processor 31 being arranged to calculate the spontaneous ventilation rate from a difference between the outdoor air temperature and the indoor air temperature. The indoor temperature, i.e. the temperature within the enclosed space 1 may be determined with the temperature sensor 22 and the outdoor temperature may be determined with the outdoor temperature sensor 24 or alternatively may be provided by an external source such as a meteorological service as previously explained. FIG. 11 schematically depicts a graph showing a relationship between the rate (in $h^{-1}$) at which the volume of an enclosed space 1 is fully replenished through spontaneous ventilation and the temperature difference (in °C) between the indoor and outdoor temperature. From this graph, it can be seen that an indication of the spontaneous ventilation rate of the enclosed space 1 can be obtained from the temperature difference between these indoor and outdoor temperatures.

Upon determining the spontaneous ventilation rate, the method 100 proceeds to operation 107 in which the processor 31 generates a control signal for the air flow displacement arrangement as a function of the determined spontaneous ventilation rate. The control signal causes the air flow displacement arrangement 65, 67 and/or 69 of the air purification apparatus 50 to control a rate of the forced ventilation airflow 82 such that the forced ventilation airflow rate exceeds the spontaneous ventilation rate. In this manner, spontaneous ventilation of outdoor air into the enclosed space 1 is effectively suppressed, such that outdoor air predominantly enters the enclosed space 1 through the forced ventilation induced by the air purification apparatus 50, which ensures that unfavourable matter in the outdoor air is largely removed therefrom by the filter arrangement 62 within the air purification apparatus 50 through which the outdoor air is passed before being released into the enclosed space 1. After the generation of this control signal and its provision to the air purification apparatus 50 by the air purification monitoring system 10, the method 100 terminates in operation 109.

Further refinements to the method 100 are of course feasible. For example, the method 100 may only be invoked if the outdoor concentration of a particular type of unfavourable matter has exceeded a defined threshold above which the concentration of this unfavourable matter may be considered potentially harmful. The outdoor concentration of the unfavourable matter of interest may be obtained in any suitable manner, e.g. using outdoor analyte sensor or an external service providing real-time information about such concentrations within the geographical location of the enclosed space 1.

As a further refinement, the processor 31 may be responsive to a pressure sensor 23 that monitors the pressure within the enclosed space 1. For example, based on the determined spontaneous ventilation rate for the enclosed space 1, the processor 31 may calculate a target pressure to be generated within the enclosed space 1 with the air purification apparatus 50 in the forced ventilation mode as previously explained. The pressure sensor 23 may be used as a feedback mechanism to determine if the air purification apparatus 50 is operated correctly, more specifically, if the rate of the forced ventilation results in the desired pressure within the enclosed space 1. If the processor 31 determines from the sensor readings provided by the pressure sensor 23 that the actual pressure within the enclosed space 1 deviates from this target pressure, the processor 31 may generate a further control signal for the air purification apparatus 50 that adjusts the forced ventilation rate generated with the air purification apparatus 50 in order to reduce the deviation of the actual pressure within the enclosed space 1 from the desired pressure. In this manner, it is for instance can be avoided that an unnecessarily high overpressure is generated within the enclosed space 1. In other words, this pressure feedback ensures that the air purification apparatus 50 is operated as efficiently as possible.

The above described embodiments of the method 100 executed by the processor 31 may be realized by computer readable program instructions embodied on a computer readable storage medium having, when executed on the processor 31, cause the processor arrangement 31 to implement the method 100. Any suitable computer readable storage medium may be used for this purpose, such as for example an optically readable medium such as a CD, DVD or Blu-Ray disc, a magnetically readable medium such as a hard disk, an electronic data storage device such as a memory stick or the like, and so on. The computer readable storage medium may be a medium that is accessible over a network such as the Internet, such that the computer readable program instructions may be accessed over the network. For example, the computer readable storage medium may be a network-attached storage device, a storage area network, cloud storage or the like. The computer readable storage medium may be an Internet-accessible service from which the computer readable program instructions may be obtained. In an embodiment, the processor 31 is adapted to retrieve the computer readable program instructions from such a computer readable storage medium and to create a new computer readable storage medium by storing the retrieved computer readable program instructions in the data storage device 33.

It should be noted that the above-mentioned embodiments illustrate rather than limit the invention, and that those skilled in the art will be able to design many alternative embodiments without departing from the scope of the invention as defined in the appended claims. In the claims, any reference signs placed between parentheses shall not be construed as limiting the claim. The word "comprising" does not exclude the presence of elements or steps other than those listed in a claim. The word "a" or "an" preceding an element does not exclude the presence of a plurality of such elements. The invention can be implemented by means of hardware comprising several distinct elements. In the device claim enumerating several means, several of these means can be embodied by one and the same item of hardware. The mere fact that certain measures are recited in mutually different dependent claims does not indicate that a combination of these measures cannot be used to advantage.

## Claims

1. An air purification monitoring system (10) for monitoring an air purification apparatus (50) adapted to purify air in an enclosed space (1), the air purification apparatus (50) comprising:

    a first inlet (57) for receiving outdoor air from an outdoor space and at least one outlet (53) coupled to the first inlet (57);
    a filter arrangement (61, 63) positioned in between the first inlet (55) and the at least one outlet (53); and
    an air flow displacement arrangement (65, 67, 69) arranged to generate a forced ventilation airflow (82) from the first inlet (57) to the at least one outlet (53);
    the air purification monitoring system (10) comprising a processor (31) arranged to:

    receive an indication of a spontaneous ventilation rate between the enclosed space (1) and the outdoor space;
    determine the spontaneous ventilation rate from said received indication; and generate a control signal for the air flow displacement arrangement (65, 67, 69) as a function of said calculated spontaneous ventilation rate, said control signal causing the air flow displacement arrangement (65, 67, 69) to control a rate of the forced ventilation airflow (82) such that the forced ventilation airflow rate exceeds the spontaneous ventilation rate.

2. The air purification monitoring system (10) of claim 1, wherein the processor (31) is arranged to determine the spontaneous ventilation rate based on said indication and a volume of the enclosed space (1).

3. The air purification monitoring system (10) of claim 1, wherein said indication comprises a series of sensor readings of a concentration of an analyte of interest within the enclosed space (1) over time, and wherein the processor (31) is arranged to calculate the spontaneous ventilation rate from said series of sensor readings.

4. The air purification monitoring system (10) of claim 3, further comprising an analyte sensor (21) arranged to provide said series of sensor readings.

5. The air purification monitoring system (10) of claim 1, wherein said indication comprises outdoor wind speed information.

6. The air purification monitoring system (10) of claim 1, wherein said indication comprises the outdoor air temperature and the indoor air temperature, and wherein the processor (31) is arranged to calculate the spontaneous ventilation rate from a difference between the outdoor air temperature and the indoor air temperature.

7. The air purification monitoring system (10) of claim 6, further comprising at least one of an indoor temperature sensor (22) for determining the indoor air temperature and an outdoor temperature sensor (24) for determining the outdoor air temperature.

8. The air purification monitoring system (10) of claim 1, wherein the processor (31) is further arranged to:

   receive a pressure sensor reading from a pressure sensor (23) indicating a pressure within the enclosed space (1); and
   generate the control signal for the air flow displacement arrangement (65, 67, 69) as a function of said spontaneous ventilation rate and the pressure sensor reading.

9. The air purification monitoring system (10) of claim 8, further comprising the pressure sensor (23).

10. An air purification apparatus (50) adapted to purify air in an enclosed space (1), comprising:

    the air purification monitoring system (10) of claim 1;
    a first inlet (57) for receiving outdoor air from an outdoor space and at least one outlet (53) coupled to the first inlet (57);
    a filter arrangement (61, 63) positioned in between the first inlet (57) and the at least one outlet (53); and
    an air flow displacement arrangement (65, 67, 69) arranged to generate a forced ventilation airflow (82) from the first inlet (57) to the at least one outlet (53), wherein the air flow displacement arrangement (65, 67, 69) is responsive to the control signal generated with the air purification monitoring system (10).

11. The air purification apparatus of claim 10, further comprising a second inlet (55) for receiving indoor air from the enclosed space coupled to the at least one outlet (53), and wherein:

    the filter arrangement (61, 63) is positioned in between the first and second inlets (57, 55) and the at least one outlet (53); and
    the air flow displacement arrangement (65, 67, 69) is further arranged to generate a recirculation airflow (81) from the second inlet (55) to the at least one outlet (53).

12. A computer implemented method (100) for generating a control signal for controlling the air purification apparatus (50) of any of claims 10 to 11, the method (100) comprising:

    receiving (103) an indication of a spontaneous ventilation rate between the enclosed space (1) and the outdoor space;
    determining (105) the spontaneous ventilation rate from said received indication; and
    generating (107) a control signal for the air flow displacement arrangement (65, 67, 69) as a function of said calculated spontaneous ventilation rate, said control signal causing the air flow displacement arrangement (65, 67, 69) to control a rate of the forced ventilation airflow (82) such that the forced ventilation airflow rate exceeds the spontaneous ventilation rate.

13. The computer-implemented method (100) of claim 12, wherein determining (105) the spontaneous ventilation rate from said received indication comprises determining the spontaneous ventilation rate based on said indication and a volume of the enclosed space (1).

14. A computer program product comprising a computer readable storage medium having computer readable program instructions embodied therewith for, when executed on the processor (31) of the air purification monitoring system (10) of any of claims 1 to 9, causing the processor (31) to implement the method (100) of claim 12 or 13.

**Patentansprüche**

1. Ein Luftreinigungs-Überwachungssystem (10) zur Überwachung eines Luftreinigungsapparates (50), angepasst, um die Luft in einem geschlossenen Raum zu reinigen (1), der Luftreinigungsapparat (50) umfasst:

Einen ersten Einlass (57) zum Aufnehmen von Außenluft aus einem Außenbereich und wenigstens einen Auslass (53), gekoppelt an den ersten Einlass (57); eine Filteranordnung (61, 63), positioniert zwischen dem ersten Einlass (55) und dem wenigstens einen Auslass (53); und
eine Anordnung zur Luftstromverdrängung (65, 67, 69), angeordnet, um einen erzwungenen Ventilations-Luftstrom (82) von dem ersten Einlass (57) zu dem wenigstens einen Auslass (53) zu erzeugen; das Luftreinigungs-Überwachungssystem (10) umfasst einen Prozessor (31), angeordnet, um:
einen Hinweis auf eine spontane Belüftungsrate zwischen dem umschlossenen Raum (1) und dem Außenraum zu erhalten; Bestimmen der Spontanbelüftungsrate aus der empfangenen Anzeige; und ein Steuersignal für die Luftstromverdrängungsanordnung (65, 67, 69) als eine Funktion der berechneten Spontanbelüftungsrate zu erzeugen, wobei das Steuersignal die Luftstromverdrängungsanordnung (65, 67, 69) veranlasst, einen bestimmten Durchsatz von Zwangsbelüftungsluftstrom (82) zu steuern, so dass der Zwangsbelüftungsluftstrom die Spontanbelüftungsrate übersteigt.

2. Das Luftreinigungs-Überwachungssystem (10) von Anspruch 1, wobei der Prozessor (31) angeordnet ist, den Durchsatz des Zwangsbelüftungsstromes aufgrund des genannten Hinweises und des Rauminhalts des geschlossenen Raumes (1) zu bestimmen.

3. Luftreinigungs-Überwachungssystem (10) nach Anspruch 1, wobei die Anzeige eine Reihe von Sensorablesungen einer Konzentration eines zu analysierenden Stoffes von Interesse innerhalb des umschlossenen Raums (1) über die Zeit umfasst, und wobei der Prozessor (31) zum Berechnen des Durchsatzes der Spontanbelüftung aus der Reihe von Sensorablesungen angeordnet ist.

4. Luftreinigungs-Überwachungssystem (10) von Anspruch 3, welches weiterhin einen Sensor für einen zu analysierenden Stoff (21) umfasst, angeordnet, um die besagte Reihe von Sensorablesungen zu liefern.

5. Luftreinigungs-Überwachungssystem (10) von Anspruch 1, wobei der besagte Hinweis eine Information zur Windgeschwindigkeit im Außenbereich umfasst.

6. Luftreinigungs-Überwachungssystem (10) nach Anspruch 1, wobei die Anzeige die Außenlufttemperatur und die Innenlufttemperatur umfasst, und wobei der Prozessor (31) angeordnet ist, um die spontane Belüftungsrate aus einer Differenz zwischen der Außenlufttemperatur und der Raumlufttemperatur zu berechnen.

7. Luftreinigungs-Überwachungssystem (10) nach Anspruch 6, ferner umfassend mindestens einen Innentemperatursensor (22) zum Bestimmen der Innenlufttemperatur und einen Außentemperatursensor (24) zum Bestimmen der Außenlufttemperatur.

8. Luftreinigungs-Überwachungssystem (10) von Anspruch 1, wobei der Prozessor (31) weiterhin angeordnet ist, um:
einen Drucksensormesswert von einem Drucksensor (23) zu empfangen, der einen Druck innerhalb des umschlossenen Raums (1) anzeigt; und das Steuersignal für die Luftstromverdrängungsanordnung (65, 67, 69) als eine Funktion der Spontanbelüftungsrate und der Drucksensorablesung zu erzeugen.

9. Luftreinigungs-Überwachungssystem (10) von Anspruch 8, weiterhin den Luftdrucksensor (23) umfassend.

10. Einen Luftreinigungsapparat (50), angepasst, um die Luft in einem geschlossenen Raum (1) zu reinigen, umfassend:
Luftreinigungs-Überwachungssystem (10) von Anspruch 1:

Einen ersten Einlass (57) zum Aufnehmen von Außenluft aus einem Außenbereich und wenigstens einen Auslass (53), gekoppelt an den ersten Einlass (57); eine Filteranordnung (61, 63), positioniert zwischen dem ersten Einlass (57) und dem wenigstens einen Auslass (53); und
eine Anordnung zur Luftstromverdrängung (65, 67, 69), angeordnet, um einen erzwungenen Ventilations-Luftstrom (82) von dem ersten Einlass (57) zu dem wenigstens einen Auslass (53) zu erzeugen; wobei die Anordnung zur Luftstromverdrängung (65, 67, 69) auf das Steuersignal reagiert, das im System zur Überwachung der Luftreinigung (10) erzeugt wird.

11. Luftreinigungsapparat nach Anspruch 10, ferner umfassend einen zweiten Einlass (55) zum Empfangen von Innenluft aus dem umschlossenen Raum, der mit dem mindestens einen Auslass (53) gekoppelt ist, und wobei:

die Filteranordnung (61, 63) zwischen dem ersten und dem zweiten Einlass (57, 55) und dem mindestens einen Auslass (53) positioniert ist; und die Luftstromverdrängungsanordnung (65, 67, 69) weiterhin so angeordnet ist, dass sie einen Rezirkulationsluftstrom (81) von dem zweiten Einlass (55) zu dem mindestens einen Auslass (53) erzeugt.

12. Eine durch Computer durchgeführte Methode (100) zum Erzeugen eines Steuersignals zur Steuerung des Luftreinigungsapparates (50) von einem der Ansprüche 10 bis 11, die Methode (100) umfasst:

Empfang (103) eines Hinweises einer Spontanbelüftungsrate zwischen dem geschlossenen Raum (1) und dem Außenbereich; Bestimmen (105) der Spontanbelüftungsrate aus dem besagten empfangenen Hinweis; und Erzeugen (107) eines Steuersignals für die Luftstromverdrängungsanordnung (65, 67, 69) als eine Funktion der berechneten Spontanbelüftungsrate, wobei das Steuersignal die Luftstromverdrängungsanordnung (65, 67, 69) veranlasst, einen bestimmten Durchsatz von Zwangsbelüftungsluftstrom (82) zu steuern, so dass der Zwangsbelüftungsluftstrom die Spontanbelüftungsrate übersteigt.

13. Durch Computer durchgeführte Methode (100) nach Anspruch 12, wobei das Bestimmen (105) der Spontanbelüftungsrate aus der empfangenen Anzeige das Bestimmen der Spontanbelüftungsrate basierend auf der Anzeige und einem Rauminhalt des umschlossenen Raums (1) umfasst.

14. Ein Computerprogramm-Produkt, umfassend ein computerlesbares Speichermedium mit darauf verkörperten computerlesbaren Programmanweisungen, um, wenn sie auf dem Prozessor (31) des Luftreinigungs-Überwachungssystems (10) nach einem der Ansprüche 1 bis 9 ausgeführt werden, den Prozessor (31) zu veranlassen, das Verfahren (100) nach Anspruch 12 oder 13 durchzuführen.

**Revendications**

1. Système de surveillance de purification d'air (10) pour surveiller un appareil de purification d'air (50) adapté pour purifier l'air dans un espace clos (1), l'appareil de purification d'air (50) comprenant:

une première entrée (57) pour recevoir l'air extérieur provenant d'un espace extérieur et au moins une sortie (53) couplée à la première entrée (57);
un agencement de filtre (61, 63) positionné entre la première entrée (55) et l'au moins une sortie (53);
et un agencement de déplacement de flux d'air (65, 67, 69) agencé pour générer un flux d'air de ventilation forcée (82) depuis la première entrée (57) vers la au moins une sortie (53);
le système de surveillance de purification d'air (10) comprenant un processeur (31) agencé pour:

recevoir une indication d'un taux de ventilation spontanée entre l'espace clos (1) et l'espace extérieur; déterminer le taux de ventilation spontanée à partir de ladite indication reçue; et générer un signal de commande pour le dispositif de déplacement de flux d'air (65, 67, 69) en fonction dudit taux de ventilation spontanée calculé, ledit signal de commande amenant le dispositif de déplacement de flux d'air (65, 67, 69) à commander un taux du flux d'air de ventilation forcée (82) de sorte que le taux de flux d'air de ventilation forcée dépasse le taux de ventilation spontanée.

2. Système de surveillance de la purification d'air (10) selon la revendication 1, dans lequel le processeur (31) est agencé pour déterminer le taux de ventilation spontanée sur la base de ladite indication et d'un volume de l'espace clos (1).

3. Système de surveillance de la purification d'air (10) selon la revendication 1, dans lequel ladite indication comprend une série de lectures du capteur d'une concentration d'un analyte d'intérêt dans l'espace clos (1) au fil du temps, et dans lequel le processeur (31) est agencé pour calculer le taux de ventilation spontanée à partir de ladite série de lectures du capteur.

4. Système de surveillance de purification d'air (10) selon la revendication 3, comprenant en outre un capteur d'analyte (21) agencé pour fournir ladite série de lectures du capteur.

5. Système de surveillance de purification d'air (10) selon la revendication 1, dans lequel ladite indication comprend des informations sur la vitesse du vent extérieur.

**6.** Système de surveillance de la purification d'air (10) selon la revendication 1, dans lequel ladite indication comprend la température de l'air extérieur et la température de l'air intérieur, et dans lequel le processeur (31) est agencé pour calculer le taux de ventilation spontanée à partir d'une différence entre la température de l'air extérieur et la température de l'air intérieur.

**7.** Système de surveillance de la purification d'air (10) selon la revendication 6, comprenant en outre au moins un capteur de température intérieure (22) pour déterminer la température de l'air intérieur et un capteur de température extérieure (24) pour déterminer la température de l'air extérieur.

**8.** Système de surveillance de la purification d'air (10) selon la revendication 1, dans lequel le processeur (31) est en outre agencé pour:

recevoir une lecture du capteur de pression à partir d'un capteur de pression (23) indiquant une pression à l'intérieur de l'espace clos (1); et

générer le signal de commande pour le dispositif de déplacement du flux d'air (65, 67, 69) en fonction dudit taux de ventilation spontanée et de la lecture du capteur de pression.

**9.** Système de surveillance de la purification d'air (10) selon la revendication 8, comprenant en outre le capteur de pression (23).

**10.** Appareil de purification d'air (50) adapté pour purifier l'air dans un espace clos (1), comprenant:

le système de surveillance de la purification d'air (10) selon la revendication 1;

une première entrée (57) pour recevoir de l'air extérieur provenant d'un espace extérieur et au moins une sortie (53) couplée à la première entrée (57);

un agencement de filtre (61, 63) positionné entre la première entrée (57) et l'au moins une sortie (53); et

un agencement de déplacement de flux d'air (65, 67, 69) agencé pour générer un flux d'air de ventilation forcée (82) depuis la première entrée (57) vers l'au moins une sortie (53), dans lequel l'agencement de déplacement de flux d'air (65, 67, 69) est sensible au signal de commande généré avec le système de surveillance de purification d'air (10).

**11.** Appareil de purification d'air selon la revendication 10, comprenant en outre une deuxième entrée (55) pour recevoir de l'air intérieur provenant de l'espace clos couplé à l'au moins une sortie (53), et dans lequel:

l'agencement de filtre (61, 63) est positionné entre les première et deuxième entrées (57, 55) et l'au moins une sortie (53); et l'agencement de déplacement de flux d'air (65, 67, 69) est en outre agencé pour générer un flux d'air de recirculation (81) depuis la deuxième entrée (55) vers l'au moins une sortie (53).

**12.** Procédé mis en œuvre par ordinateur (100) pour générer un signal de commande pour commander l'appareil de purification d'air (50) selon l'une quelconque des revendications 10 à 11, le procédé (100) comprenant:

recevoir (103) une indication d'un taux de ventilation spontanée entre l'espace clos (1) et l'espace extérieur; déterminer (105) le taux de ventilation spontanée à partir de ladite indication reçue; et

générer (107) un signal de commande pour le dispositif de déplacement de flux d'air (65, 67, 69) en fonction dudit taux de ventilation spontanée calculé, ledit signal de commande amenant le dispositif de déplacement de flux d'air (65, 67, 69) à commander un taux du flux d'air de ventilation forcée (82) de telle sorte que le taux de flux d'air de ventilation forcée dépasse le taux de ventilation spontanée.

**13.** Procédé mis en œuvre par ordinateur (100) selon la revendication 12, dans lequel la détermination (105) du taux de ventilation spontanée à partir de ladite indication reçue comprend la détermination du taux de ventilation spontanée sur la base de ladite indication et d'un volume de l'espace clos (1).

**14.** Produit de programme informatique comprenant un support de stockage lisible par ordinateur ayant des instructions de programme lisibles par ordinateur incorporées avec celui-ci pour, lorsqu'il est exécuté sur le processeur (31) du système de surveillance de purification d'air (10) selon l'une quelconque des revendications 1 à 9, amenant le processeur (31) à mettre en œuvre le procédé (100) de la revendication 12 ou 13.

**FIG. 1**

**FIG. 2**

50

**FIG. 3**

50

**FIG. 4**

FIG. 5

FIG. 6

```
┌─────────┐
│   101   │
└─────────┘
     │
     ▼
┌─────────┐
│   103   │
└─────────┘
     │
     ▼
┌─────────┐
│   105   │
└─────────┘
     │
     ▼
┌─────────┐
│   107   │
└─────────┘
     │
     ▼
┌─────────┐
│   109   │
└─────────┘
```

<u>100</u>

# FIG. 7

FIG. 8

**FIG. 9**

**FIG. 10**

EP 3 707 439 B1

**FIG. 11**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 2008104744
- US 2013239803 A1

- WO 2013001155 A1